Europäisches Patentamt

European Patent Office

Office européen des brevets

(11) Veröffentlichungsnummer: **0 300 187 B1**

# (12) EUROPÄISCHE PATENTSCHRIFT

(45) Veröffentlichungstag der Patentschrift: **25.09.91**

(21) Anmeldenummer: **88109294.4**

(22) Anmeldetag: **12.06.85**

(51) Int. Cl.⁵: **G11B 15/10, G11B 15/18, G11B 15/44**

(60) Veröffentlichungsnummer der früheren Anmeldung nach Art. 76 EPÜ: **0 168 856**

(54) **Laufwerk für ein Magnetbandkassettengerät.**

(30) Priorität: **15.06.84 DE 3422259**

(43) Veröffentlichungstag der Anmeldung:
**25.01.89 Patentblatt 89/04**

(45) Bekanntmachung des Hinweises auf die
Patenterteilung:
**25.09.91 Patentblatt 91/39**

(84) Benannte Vertragsstaaten:
**DE FR GB IT**

(56) Entgegenhaltungen:
EP-A- 0 072 586          DE-A- 3 346 893
DE-B- 2 830 319          DE-C- 3 312 134
DE-C- 3 401 691          FR-A- 2 494 019
GB-A- 2 004 403

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

Patentinhaber: **N.V. Philips' Gloeilampenfabrieken
Groenewoudseweg 1
NL-5621 BA Eindhoven(NL)**

(84) Benannte Vertragsstaaten:
**FR GB IT**

(72) Erfinder: **Kunze, Norbert
Mozartstrasse 7
W-6322 Ehringshausen(DE)**

(74) Vertreter: **Kupfermann, Fritz-Joachim,
Dipl.-Ing. et al
Philips Patentverwaltung GmbH Wendenstrasse 35 Postfach 10 51 49
W-2000 Hamburg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf ein Laufwerk für ein Magnetbandkassettengerät gemäß dem ersten Teil des Anspruchs 1.

Ein derartiger Verriegelungsmechanismus ist bekannt. Die Verriegelung und Entriegelung der eingeschobenen Tasten erfolgt mittels eines quer zur Einschieberichtung arbeitenden Verriegelungsschiebers. Derartige Anordnungen sind platzraubend und benötigen viele Federn, die zum Zusammenspiel von Tasten und Verriegelungsschieber notwendig sind. In modernen, mit viel Technik vollgepackten Autoradios ist dafür kein Platz.

Die Patentveröffentlichung FR-A-2494019 offenbaut einen Verriegelungsmechanismus für zwei Bedienungsstangen, der einen schwenkbaren Verriegelungshebel aufweist, der mittels Federkraft eine eingedrückte Bedienungsstange verriegelt. Der Verriegelungshebel ist aus der Verriegelungslage durch Einschieben der benachbarten anderen Bedienungsstange, entriegelbar.

Es ist Aufgabe der Erfindung, den Tastenverriegelungsmechanismus eines Laufwerkes der eingangs erwähnten Art derart zu verbessern, daß die Verriegelung und Entriegelung mit wenigen Einzelteilen kleiner Bauweise möglich ist.

Die gestellte Aufgabe wird bei einem Laufwerk der eingangs genannten Art erfindungsgemäß durch die Merkmale im kennzeichnenden Teil des Anspruchs 1 gelöst.

Durch den rein mechanischen Aufbau des Verriegelungsmechanismus, als sich selbst in die Verriegelungsstellung bringbarer Schwenkhebel, kann dieser einfach und klein ausgebildet sein und in Massenproduktion beispielsweise in Kunststoff hergestellt werden. Außerdem tritt keine Wärmeentwicklung bei seinem Betrieb auf. Durch die überdeckende Anordnung von Teilen der Schnellspulstangen ist es möglich, mit einem einzigen Schwenkhebel die Arretierung von jeweils einer der eingeschobenen Schnellspulstangen vorzunehmen. Sind die Schnellspul-Bedienungsstangen beide ausgeschoben, dann hat der federelastisch ausgebildete Arm praktisch keinen vorspannenden Kontakt mit einer der Stangen. Erst wenn eine der Stangen eingedrückt wird, entsteht die Federkraft. Da er keine Dauerbelastung hat, erleidet er keine Materialermüdung. In vorteilhafter Weise ist dabei vorgesehen, daß mit beiden Rastnasen und beiden schrägen Kanten der Schnellspul-Bedienungsstangen ein auf beide einwirkender Schwenkhebel vorgesehen ist.

Nach einer weiteren Ausgestaltung der Erfindung ist vorgesehen, daß die Rastnasen der Schnellspul-Bedienungsstangen an ihren von den Tastenknöpfen abliegenden Endbereichen vorgesehen sind und die schrägen Kanten dazwischenliegen, wobei der Schwenkhebel zwischen den schrägen Kanten und den Rastnasen an einer Drehachse gelagert ist. Dies ergibt eine platzsparende Anordnung.

Nach einer weiteren Ausgestaltung der Erfindung ist vorgesehen, daß am Verriegelungshebel ein Stift vorgesehen ist, der von einer anderen, dem Kassettenauswurf dienenden Bedienungsstange betätigbar ist zum Entriegeln der jeweils eingeschobenen verriegelten Schnellspul-Bedienungsstange. Hierdurch ergibt sich eine weitere Möglichkeit der Entriegelung der eingeschobenen Schnellspul-Bedienungsstangen beispielsweise durch die kurze Betätigung der Auswurf-Bedienungsstange.

Nach einer weiteren Ausgestaltung der Erfindung ist vorgesehen, daß sich der Verriegelungshebel mit seiner Längsrichtung etwa parallel zu einem Außenrand der ihn lagernden Chassisplatte erstreckt. Dieser Bereich am Außenrand ist aufgrund der Geometrie des Laufwerkes besonders geeignet, insbesondere im Hinblick auf die unmittelbar oder mittelbar kraftschlüssige Verbindung mit einem Positionierelement der Auswurf-Bedienungsstange.

Nach einer weiteren Ausgestaltung der Erfindung ist vorgesehen, daß die Schnellspulstangen in den sich überdeckenden Bereichen Auflaufflächen aufweisen, mittels der die Kopfplatte aus der Spielstellung herausfahrbar und in der herausgefahrenen Stellung positionierbar ist. Die Auflaufflächen sind damit an denselben flachen Überdeckungsteilen der Schnellspulstange angebracht wie die Rastnasen und schrägen Kanten und lassen sich in einem einfachen Preßvorgang mit den letzteren bilden.

Nach einer weiteren Ausgestaltung der Erfindung ist vorgesehen, daß an den Schnellspul-Bedienungsstangen in den sich überdeckenden Bereichen ein Ansatz bzw. eine Auflauffläche vorgesehen sind, mittels der ein Bügel, der Zahnräder trägt, von der jeweils eingedrückten Bedienungsstange für die Dauer ihrer Verrriegelung gegen Federkraft verschoben ist. Auch dieser Ansatz bzw. diese Auflauffläche lassen sich mit den Rastnasen und anderen schrägen Flächen in einem gemeinsamen Preßvorgang herstellen.

Nach einer weiteren Ausgestaltung der Erfindung ist vorgesehen, daß der Schwenkhebel aus Verriegelungshebel und und federelastischem Arm ein einstückiges Spritzteil sind. Da der Schwenkhebel jeweils nur kurzfristig belastet wird während des Schnellspulens, im übrigen unbelastet ist, ist es möglich, ein Kunststoffteil zu verwenden, insbesondere bei Autoradios, bei denen eine starke Wärmeentwicklung stattfindet.

Die Erfindung wird anhand des in der Zeichnung dargestellten Ausführungsbeispieles näher erläutert. Es zeigen:

Fig. 1 die Ansicht eines Laufwerkes für ein Magnetbandkassettengerät von der Antriebsseite her,

Fig. 2a eine schaubildlich vergrößerte Darstellung des Laufwerkes bei ausgeworfener Kassette und entriegelten Verriegelungsmechanismen,

Fig. 2b das Laufwerk schaubildlich in einer Lage, in der der zweite Verriegelungsmechanismus noch verriegelt und der erste auf dem Wege ist, zu entriegeln, wobei der Entriegelungsvorgang durch das Erreichen des Bandendes ausgelöst wird,

Fig. 2c eine schaubildliche Darstellung des Laufwerkes, bei dem der erste Verriegelungsmechanismus in einer Lage ist, in der er gerade entriegelt wird und sich dabei so weit bewegt hat, daß er den zweiten Verriegelungsmechanismus auch gerade entriegelt,

Fig. 3a eine schematische Darstellung des Laufwerkes, bei dem beide Verriegelungsmechanismen verriegelt sind,

Fig. 3b das Laufwerk in schematischer Darstellung, bei dem der erste Verriegelungsmechanismus bereits entriegelt ist und auf eine andere Art und Weise auf dem Wege ist, den zweiten Verriegelungsmechanismus zu entriegeln,

Fig. 4 das Laufwerk, von der Tonkopfseite her gesehen, bei herausgenommener Kassette und

Fig. 5 das Laufwerk mit der Kopfplatte in der Arbeitsstellung.

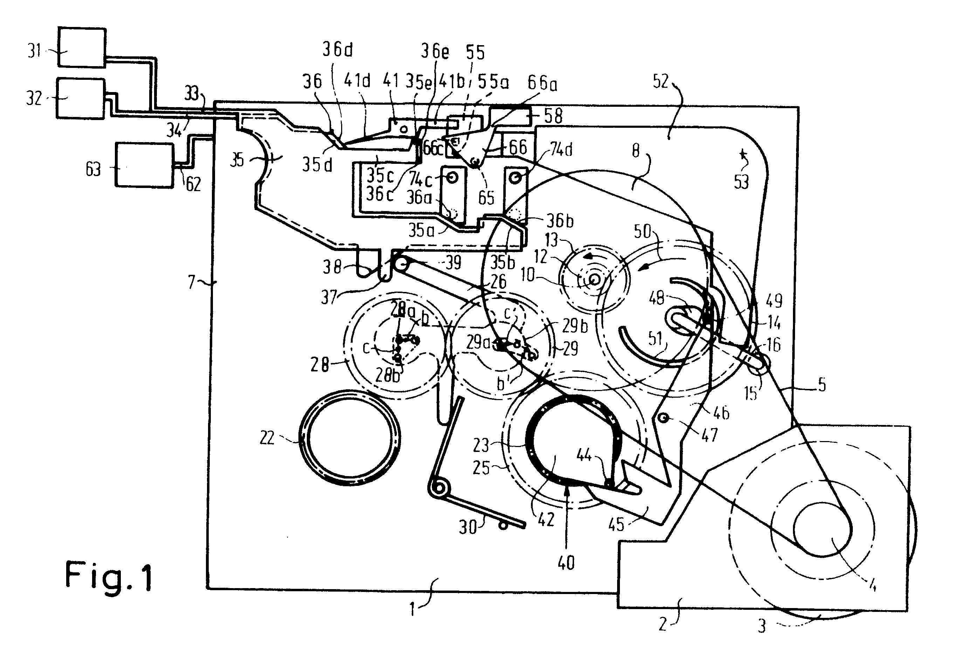

Das in Fig. 1 dargestellte Magnetbandkassettengerät weist ein Gestell 1 auf, das über eine Stütze 2 einen nur in einer Richtung umlaufenden Antriebsmotor 3 trägt. Das Antriebsritzel 4 des Motors 3 führt eine Peese 5, die auch über eine Schwungradscheibe 8 geführt ist. Die Schwungscheibe 8 ist im Gestell 1 gelagert und ist fest verbunden mit einer Tonwelle 10. Weiterhin ist die Schwungscheibe 8 mit einem Zahnrad 12 verbunden. Über eine Rutschkupplung ist koaxial zu dem Zahnrad 12 ein weiteres Zahnrad 13 auf der Schwungscheibe 8 drehbar angeordnet. Mit dem Zahnrad 12 auf der Schwungscheibe 8 ist ständig kämmend ein als Zahnrad ausgebildetes Schaltrad 14 in Eingriff. Dieses Zahnrad 14 ist schwenkbar um eine Achse 15. Die Achse 15 trägt einen in Fig. 1 schematisch dargestellten Schwenkarm 16, auf dem drehbar das Schaltrad 14 gelagert ist.

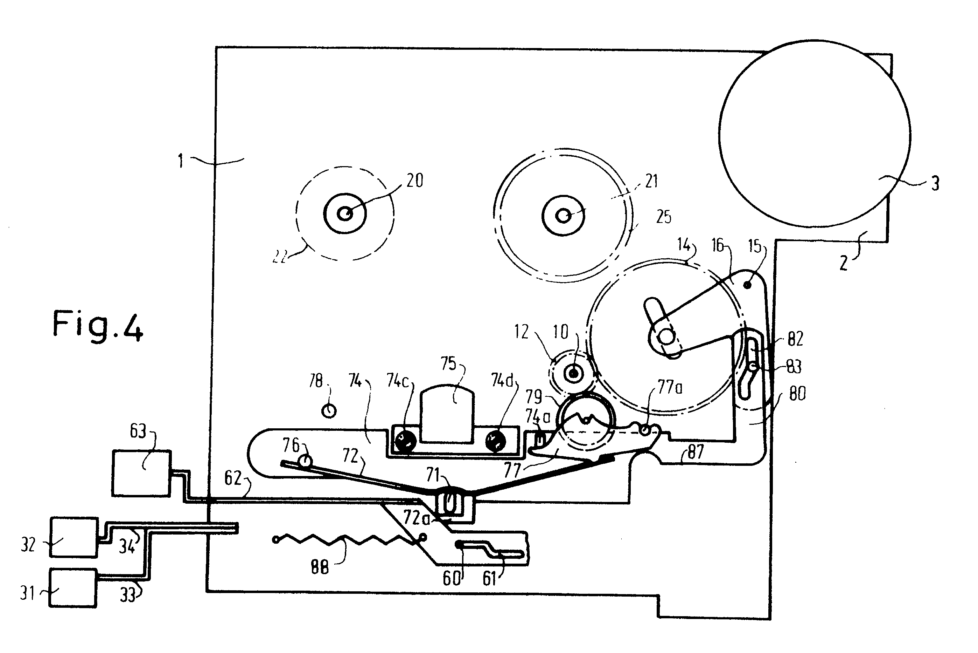

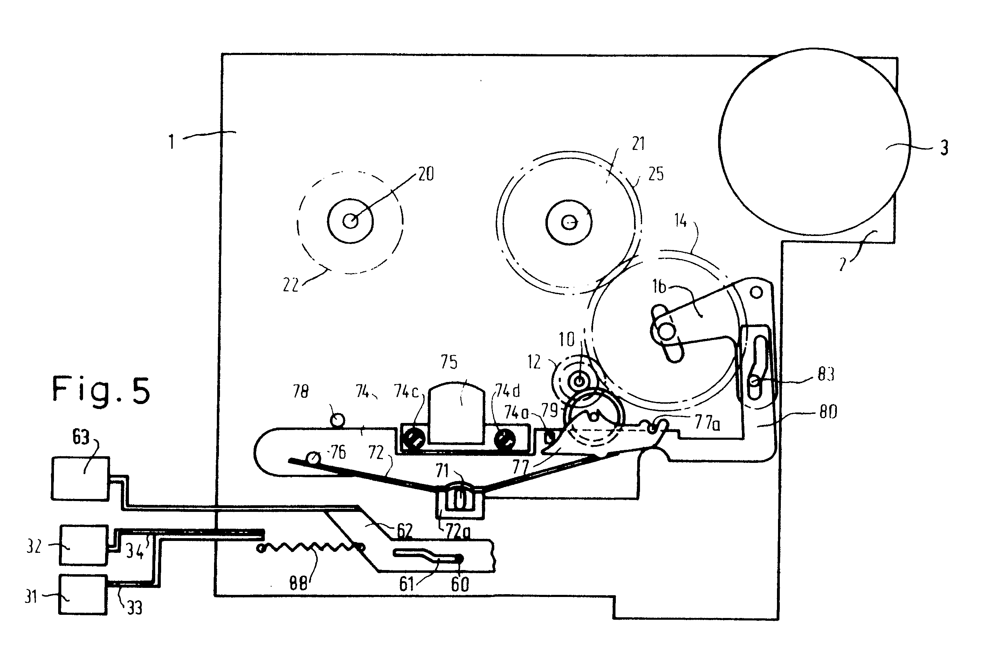

Wie auch in Fig. 4 und 5 dargestellt, sind drehbar im Gestell 1 Wickeldorne 20 und 21 gelagert. Diese Wickeldorne 20 und 21 sind fest verbunden mit Schnellspulrädern 22, 23. Über eine Rutschkupplung ist mit dem Wickeldorn 21 ein Spielrad 25 verbunden.

In Fig. 5 ist dargestellt, wie das Spielrad 25 über das Schaltrad 14 von dem Zahnrad 12 angetrieben wird.

Ein Bügel 26, der verschiebbar im Gestell 1 gelagert ist, trägt nebeneinander zwei Zahnräder 28, 29 (siehe Fig. 1). Eine Feder 30 drückt den Bügel 26 immer in eine in Fig. 1 dargestellte Ausgangsposition.

Der Bügel 26 trägt zwei Stifte 28a und 29a, die in einem dreieckigen Loch 28b bzw. einem Schlitz 29b verschiebbar sind im Gestell 1.

Zum schnellen Vor- und Rücklauf sind zwei Vor- bzw. Rücklauftasten 31 und 32 vorgesehen. Über Tastenstangen 33 und 34 sind diese Tasten 31, 32 mit Schiebern 35, 36 verbunden. Diese Schieber 35 und 36 wirken auf den Bügel 26 ein. Dazu ist der Schieber 35 mit einem Ansatz 37 versehen; der Schieber 36 trägt entsprechend eine Auflauffläche 38. Der Ansatz 37 und die Auflauffläche 38 arbeiten auf einen Stift 39 des Bügels 26. Weiter sind die Schieber 35, 36 mit Auflaufflächen 35a, 35b bzw. 36a, 36b versehen, die auf Stifte 74c, 74d einer Kopfplatte 74 (Fig. 1, 4 und 5) arbeiten können.

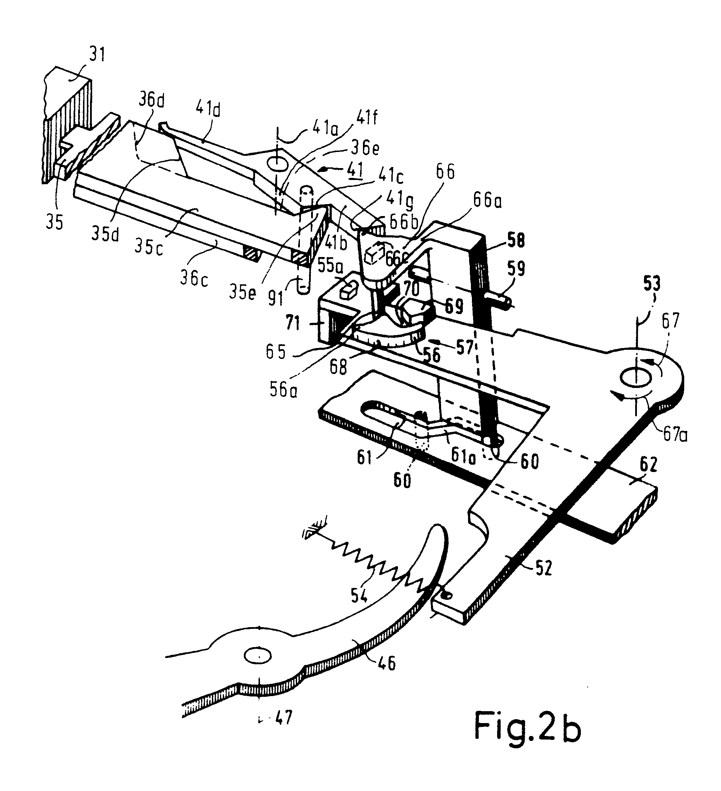

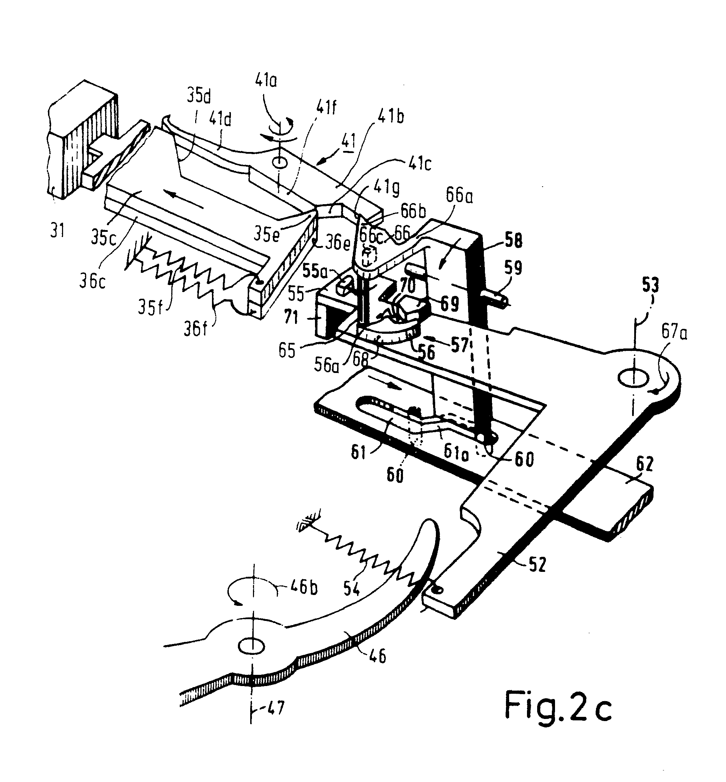

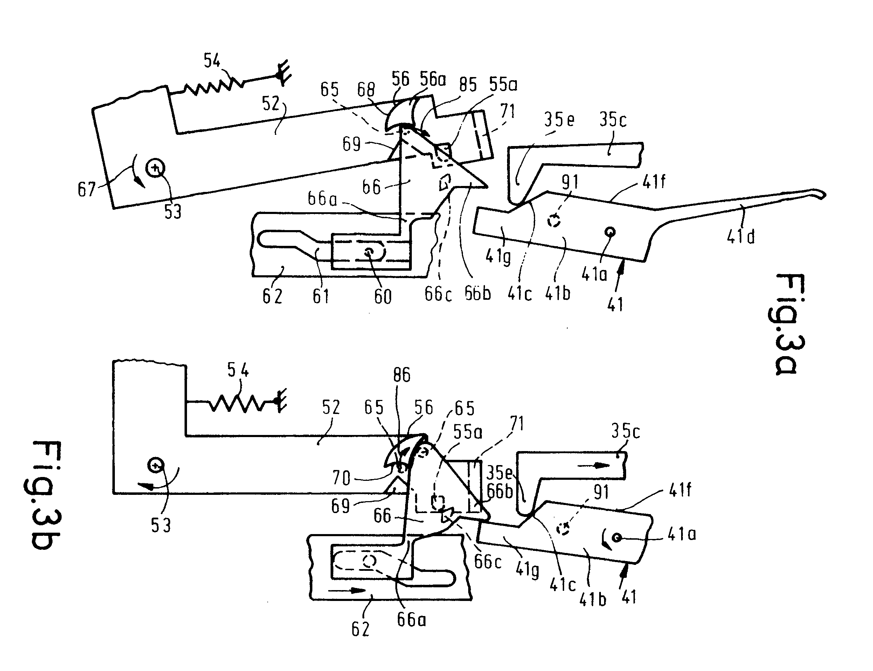

Die Schieber 35, 36 sind jeder für sich in der eingeschobenen Stellung verriegelbar (vergl. Fig. 2b und 3a). Die Schieber 35, 36 tragen Rastlaschen 35c, 36c. Diese Rastlaschen 35c, 36c haben jeweils schräge Auflaufflächen 35d, 36d und im Abstand davon Rastnasen 35e, 36e. Im folgenden wird, da beide Laschen 35c, 36c gleich ausgebildet sind, nur noch die Lasche 35c in ihrer Funktionsweise beschrieben. Beide Schieber 35 und 36 werden mit Hilfe von Federn 35f und 36f (Fig. 2c) in die Ausgangslage zurückgezogen, wenn dies nach einer Entrastung möglich ist. Zur Verriegelung der Schieber 35, 36 dient ein für beide gemeinsamer zweiarmiger Schwenkhebel 41, der um eine Achse 41a schwenkbar ist. Der zweiarmige Schwenkhebel 41, der vorzugsweise aus Kunststoff hergestellt ist, weist an einem Verriegelungsarm 41b eine schräge Kante 41c auf, hinter der beide Verriegelungsnasen 35e und 36e verrasten können. Der andere Arm 41d des Schwenkhebels 41 ist federnd elastisch ausgebildet und wirkt mit den schrägen Flächen 35d und 36d der Schieber 35, 36 zusammen. Beim Eindrücken eines der Schieber 35, 36, beispielsweise des Schiebers 35, drückt die schräge Kante 35d des Schiebers 35 den federnden Arm 41d derart beiseite, daß der Verriegelungsarm 41b im Uhrzeigersinn um die Achse 41a verschwenkt wird. Die Rastnase 35e fährt dann hinter die schräge Fläche 41c, und der Schieber 35 ist allein von dem Schwenkhebel 41 verrastet. Soll eine Entrastung vorgenommen werden, dann wird der andere Schieber 36 eingeschoben, und die schräge Kante 36d des Schiebers 36 drückt die Rastnase 36e des Schiebers 36 gegen eine Seitenwand 41f des Schwenkhebels 41. Dadurch wird der federnde Arm 41d stärker als zuvor durchgebogen, und die Rastnase 36e drückt den Verriegelungsarm 41b entgegen dem Uhrzeigersinn so weit weg, daß die Rastnase 35e von der schrägen Kante 41c frei kommt. Beide Schieber werden dann mit Hilfe der Federn 35f und 36f in ihre Ausgangslage nach außen zurückgezogen.

Der Verriegelungsarm 41b ist noch mit einem Kupplungsansatz 41g versehen, dessen Wirkungsweise später erklärt wird.

Wenn durch Eindrücken der Schnellspultaste 31 der Ansatz 37 gegen den Stift 39 des Bügels 26 drückt, kommt erst das Zahnrad 29 in Eingriff mit dem Zahnrad 13. Dabei macht der Stift 28a eine Bewegung in Richtung des Pfeiles b und der Stift 29a eine Bewegung in Richtung des Pfeiles c'. Bei weiterer Bewegung fährt der Stift 29a weiter in Richtung des Pfeiles b' und kommt das Zahnrad 29 in Eingriff mit dem Zahnrad 23. Das Magnetband wird jetzt mit dem Wickeldorn 21 schnell gewickelt. Wird die andere Schnellspultaste 32 eingedrückt, dann wirkt die weitere Auflauffläche 38 auf den Stift 39 des Bügels 26 ein, wodurch der Stift 28a in Richtung des Pfeiles c und der Stift 29a in Richtung des Pfeiles c' fährt; das Zahnrad 29 kommt dadurch mit dem Zahnrad 13 und das Zahnrad 28 mit dem Zahnrad 22 in Eingriff. Dadurch wird der andere Wickeldorn 20 zum Schnellspulen angetrieben.

Wenn die Kopfplatte 74 in eine Spielstellung (Arbeitsstellung) gelangt ist, nehmen die Stifte 74c, 74d die gestrichelte Lage in Fig. 1 ein. Diese Lage stimmt überein mit der Lage gemäß Fig. 5. Das Eindrücken der Bedienungsstange 33 bzw. 34 hat jetzt zur Folge, daß über die Auflauffläche 35a, 35b bzw. 36a, 36b die Stifte 74c, 74d und damit die Kopfplatte 74 aus der Spielstellung zurückgeschoben werden, so daß ein Tonkopf 75 und eine Andruckrolle 79 ein wenig von dem Magnetband abgehoben werden während des Schnellspulens.

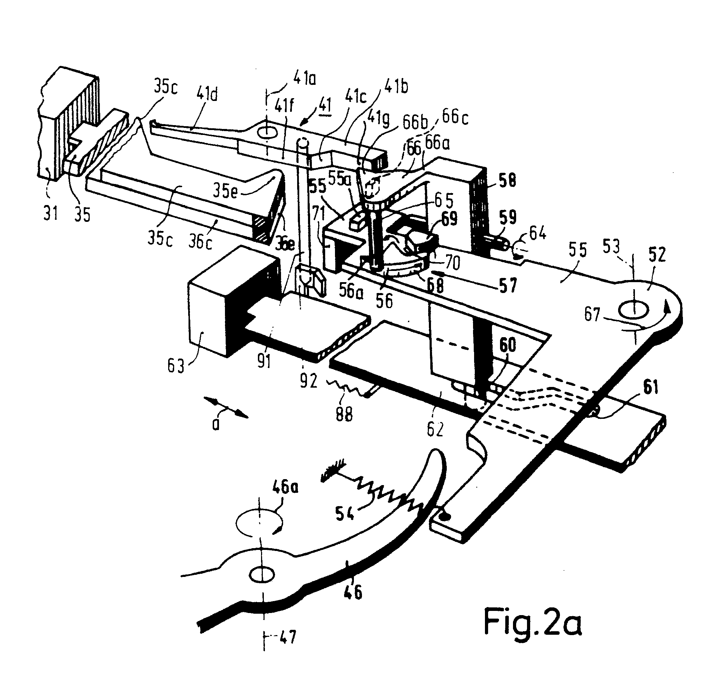

Ein Detektionsorgan 40, bestehend aus einer Scheibe 42, ist über eine Rutschkupplung mit dem Wickeldorn 21 verbunden. Auf der Scheibe 42 ist ein Stift 44 angeordnet, der innerhalb einer Schaltgabel 45 liegt. Die Schaltgabel 45 ist an einem Schaltelement 46 angeordnet, das um ein Lager 47 drehbar ist (vergl. auch Fig. 2a, 2b und 2c). Das Schaltrad 14 trägt in seiner Mitte erhaben vorstehend einen ein wenig ellipsenförmigen Nocken 48. Das Schaltelement 46 greift über das Schaltrad 14 und trägt einen Stift 49, der bei nach innen geschwenktem Schaltelement 46 um den Nocken 48 herumfahren kann bei Drehung des Schaltrades in Richtung eines Pfeiles 50. Um den Nocken 48 herum erstreckt sich in einem größeren Abstand eine erhaben aus dem Schaltrad 14 herausstehende, spiralförmige Steuerkurve 51. Auch diese Steuerkurve 51 kann mit dem Stift 49 an dem Schaltelement 46 zusammenwirken, und zwar immer dann, wenn das Detektionsorgan 60 den Bandstillstand feststellt. In diesem Fall drückt der Stift 44 nicht mehr gegen die Schaltgabel 45, wodurch der Stift 49 am Schaltelement 46 nicht mehr nach innen in Richtung auf den Nocken 48 belastet wird, sondern stehen bleibt und bei fortgehender Drehung des Schaltrades 14 in Richtung des Pfeiles 50 auf die Außenseite der Steuerkurve 51 gelangt. Weil die Steuerkurve 51 spiralförmig ist, wird das Schaltelement 46 im Uhrzeigersinn um sein Lager 47 verschwenkt, wodurch das Schaltelement 46 gegen ein Verbindungselement 52 gedrückt wird. Das Schaltelement 46 schwenkt dabei in Richtung des Pfeiles 46a (Fig. 2a).

Das Verbindungselement 52 ist ein doppelarmiger Hebel, der um ein Lager 53 schwenkbar ist. Wie aus den schaubildlichen Darstellungen in Fig. 2a, 2b und 2c zu erkennen ist, ist das Verbindungselement 52 aufgrund der Wirkung einer Feder 54 im Uhrzeigersinn federbelastet. Damit spannt die Bewegung des Schaltelementes 46 im Uhrzeigersinn die Feder 54.

Der von dem Angriffspunkt des Schaltelementes 46 abgewandte Hebelarm 55 des Verbindungselementes 52 trägt eine Herzkurve 56, die zu einem Rastmechanismus 57 gehört. Zu dem Rastmechanismus 57 gehört auch ein Rasthebel 58, der um eine Achse 59 verschwenkbar ist. Die Achse 59 liegt parallel zu der Oberfläche des Gestells 1. Der Rasthebel 58 trägt auf der von der Herzkurve 56 abgewandten Seite einen Führungsstift 60, der in einer schlitzförmigen Führungskulisse 61 eines Bedienungsschiebers oder einer Bedienungsstange 62 einer Stop/Auswurftaste 63 vorgesehen ist. Die Verschiebungsrichtung a der Bedienungsstange 62 verläuft parallel zur Achse 59, und die Stange 62 wird mittels einer Zugfeder 88 (Fig. 4, 5) in die Ausfahrrichtung gezogen. Der Führungsschlitz oder die Kulisse 61 haben einen solchen Verlauf, daß der Rasthebel 58 beim Verschieben aus der Lage in Fig. 2a nach Fig. 2b (Herausfahren der Stange 62) um die Achse 59 in Richtung eines Pfeiles 64 verschwenkt wird, wodurch ein Raststift 65 auf das Niveau der Herzkurve 56 abgesenkt wird und der Raststift 65 von der Herzkurve 56 bewegt werden kann. Das Nach-Außen-Schieben der Stop/Auswurftaste 63 bzw. der Stange 62 erfolgt durch das Einschieben einer Magnetbandkassette in das Gerät.

Fig. 2a zeigt die Stange 62 in einer eingeschobenen Stellung, während die Fig. 2b und 2c die Stange 62 in ausgeschobener Stellung zeigen.

Der Rasthebel 58 trägt über ein Filmgelenk 66a einen Verriegelungsarm 66, an dem der Raststift 65 angeordnet ist. Der Raststift 65 kann die Herzkurve 56 umfahren. In Fig. 2a (entsprechend der Lage der Stange 62 in Fig. 1 und 4) liegt der eine erste Nase bildende Stift 65 oberhalb der als erster Nocken ausgebildeten Herzkurve 56, da die Stange 62 eingedrückt ist. Wenn, wie schon erwähnt, die Stange 62 ausgefahren ist (in Fig. 5 dargestellt), kann der Stift 65 mit der Herzkurve 56 zusammenwirken. Wenn das Schaltelement 46 das Verbindungselement 52 entgegen dem Uhrzeigersinn in Richtung eines Pfeiles 67 (Fig. 2a) verschwenkt, kann der Stift 65 an einer Seitenwand 68 der Herzkurve 56 entlang laufen. Ein Führungsnocken 69 sorgt dafür, daß der Stift 65 in eine Mulde 70 der Herzkurve einfällt (Fig. 3a).

Am Hebelarm 55 ist ein Nocken 71 angeordnet. Dieser Nocken 71 wirkt, wie sich aus den Fig. 4 und 5 ergibt, mit einer Blattfeder 72 sowie einem Teil 72a der Blattfeder 72 zu sammen und erstreckt sich durch einen Längsschlitz des Gestells 1 hindurch. Die Blattfeder 72 drückt mit ihrem einen freien Ende gegen eine Halterung 77, die auf einer Kopfplatte 74 um eine Achse 77a schwenkbar gelagert ist. Das andere freie Ende drückt gegen einen Stift 76 der Kopfplatte 74. Diese Kopfplatte 74 trägt in ihrer Mitte einen Tonkopf 75 und rechts des Tonkopfes 75 die Halterung 77, in der eine Andruckrolle 79 gelagert ist. Die Halterung 77 wird in der zurückgezogenen Stellung der Kopfplatte 74 gegen einen Anschlag 74a der Kopfplatte 74 gedrückt.

Die Kopfplatte 74 hat ein abgewinkeltes Ende 80. Das abgewinkelte Ende 80 weist einen Schlitz 82 auf, in dem ein Stift 83 verschiebbar ist, der auf dem Schwenkarm 16 befestigt ist. Dadurch ist in der Stellung nach Fig. 5 der Schwenkarm 16 derart um die Achse 15 verschwenkt, daß das Schaltrad 14 mit dem Spielrad 25 und dem Zahnrad 12 kämmt. Dementsprechend ist in der Stellung nach Fig. 5 die Druckrolle 79 gegen die Tonwelle 10 gedrückt, wobei die Halterung 77 vom Anschlag 74a freigekommen ist.

Die Funktionsweise des Magnetbandkassettengerätes ist wie folgt: Wird eine Kassette eingelegt, dann fährt die Bedienungsstange 62 aus der Stellung nach Fig. 2a und 4 in die Stellung nach Fig. 2b und 5. Damit wird ein nicht dargestellter Antriebsschalter geschlossen, und der zentrale Antriebsmotor 3 wird in Betrieb gesetzt. Es dreht sich nun auch die Schwungscheibe 8. Gleichzeitig dreht sich das Zahnrad 12 und das damit kämmende Zahnrad 14.

Durch das Ausfahren der Bedienungsstange 62 (aus Stellung nach Fig. 2a in Stellung nach Fig. 2b) schwenkt der Rasthebel 58 (Fig. 2a) um die Achse 59, und der Raststift 65 kommt in den Wirkbereich mit der Herzkurve 56.

Weil das Zahnrad 14 nicht in Eingriff ist mit dem Zahnrad 25, dreht der Wickeldorn 21 nicht mit. Die Scheibe 42 (Fig. 1) ist über ihre separate Reibungskupplung mit dem Wickeldorn 21 verbunden und steht damit auch still. Da beim Einbringen der Kassette ein Drehmoment auf das Schaltelement 46 fehlt, weil die Bandwickel noch nicht umlaufen und das Band still steht, bleibt das Schaltelement 46 in der in Fig. 1 dargestellten Stellung stehen und kommt damit mit dem Stift 49 auf die Außenseite der Steuerkurve 41. Damit macht das Schaltelement 46 eine Bewegung im Uhrzeigersinn gemäß Pfeil 46a in Fig. 2a und schwenkt das Verbindungselement 52 entgegen dem Uhrzeigersinn (Pfeil 67). Weil der Rasthebel 58 geschwenkt ist und der Stift 65 der Herzkurve im Wirkbereich ist, umläuft der Stift 65 nun die Wand 68 der Herzkurve 56 und fällt in die Mulde 70 ein. Damit ist das Verbindungselement in einer eingeschwenkten Stellung eingerastet (Fig. 3a). Durch das Schwenken des Verbindungselementes 52 entgegen dem Uhrzeigersinn in Richtung des Pfeiles 67 bewegt sich der Nocken 71 nach innen und drückt gegen die Blattfeder 72. Die Blattfeder 72 drückt ihrerseits über den Stift 76 und die Halterung 77 gegen die Kopfplatte 74 und schiebt die Kopfplatte 74 in Richtung auf die Tonwelle 10. In der Spiel- oder Arbeitsstellung liegt die Andruckrolle 79 an der Tonwelle 10 an. Außerdem liegt die Kopfplatte 74 an einem Anschlagstift 78 an (Fig. 5). Dies ist die Spielstellung der Kopfplatte, in der bei umlaufendem Motor 3 das Magnetband am Kopf 75 entlanggeführt wird.

Beim Erreichen des Bandendes bleibt das Band stehen. Dadurch wird das Schaltelement 46 mit seinem Stift 49 im Uhrzeigersinn (Pfeil 46a) nach außen geschwenkt. Das Verbindungselement 52 schwenkt entgegen dem Uhrzeigersinn (Fig. 3a) in Richtung des Pfeiles 67. Das Verbindungselement 52 wird bei diesem Bewegen über den Normalhub, der bei eingerasteter Lage vorliegt, in einem Überhub weitergeschwenkt. Der Überhub wird möglich, da der Nocken 71 gegen die Blattfeder 72 an der Kopfplatte 74 drückt über den Hebel 77 und den Stift 76. Damit hat der Nocken 71 einen Ausweichspielraum in Richtung auf die Kopfplatte 74. Bei diesem Überhub fährt der Stift 65 aus der Mulde 70 in Richtung eines Pfeiles 85 heraus, und der Rastmechanismus 57 entrastet. Die Steuerkurve 51 gibt jetzt den Stift 49 frei, so daß das Schaltelement 46 in Richtung des Pfeiles 46b nach Fig. 2c zurückbewegt werden kann. Dadurch kann das Verbindungselement 52 durch die Kraft der Feder 54 in Richtung des Pfeiles 67a (Fig. 2c) verschwenken. Durch den Kontakt des Raststiftes 65 mit der Herzkurve 56 wird der Verriegelungsarm 66 durch einen Ansatz 56a entgegen der Federkraft des Filmgelenkes an der Herzkurve 56 weiter im Uhrzeigersinn in Richtung des Pfeiles 85 (nach Fig. 3a) weiter geschwenkt. Ist in diesem Fall der zweite Verriegelungsmechanismus verrastet - dies entspräche der Schnelllauffunktion am Bandende - , dann stößt die Nase 66b gegen den Ansatz 41g des Schwenkhebel 41. Dadurch wird die Verrastung der Tasten 35, 36 an den Stellen 35e/36e bzw. 41c aufgehoben. Damit entrastet die Bedienungsstange 33, 34.

Gleichzeitig fährt der Nocken 71 nach außen, womit die Kopfplatte zurückgefahren wird. Der nicht dargestellte Schalter ist damit geöffnet, und der Motor 3 ist stillgesetzt.

Befindet sich die Kopfplatte 74 in der Spiel- oder Arbeitsstellung und wird gewünscht, daß schnell gespult wird, dann wird eine der Tasten 33 oder 34 eingedrückt. Wie bereits beschrieben, wird diese Taste in der eingeschobenen Stellung verriegelt mit Hilfe des zweiten Verriegelungsarmes 41b. Dabei wird auf die beschriebene Weise der Wickeldorn 20 oder der Wickeldorn 21 schnell angetrieben. Wie dieses Schnellspulen unabhängig von der Stellung der ersten Verriegelungsvorrichtung auf eine erste Weise beendet werden kann, ist bereits beschrieben, und zwar dadurch, daß man die jeweils andere Taste 34 oder 31 eindrückt, wobei sich die Verriegelung löst und beide Tasten herausfahren. Da die Kopfplatte noch immer über die Herzkurve in der Spiel- oder Arbeitsstellung verriegelt ist mittels der Herzkurve 57, wird der Schnellspulvorgang beendet und wieder in den normalen Spielvorgang übergegangen.

Wird dagegen beim Schnellspulen das Bandende erreicht, dann fängt gemäß einer zweiten Entriegelungsmöglichkeit auf bereits beschriebene Weise über das Schaltelement 46 und das als Transporthebel eingesetzte Verbindungselement 52 das Entriegeln der ersten Verriegelungsvorrichtung, die aus der Herzkurve 57 und dem Stift 65 sowie dem Verriegelungsarm 66 gebildet wird, an. Dadurch wird auf ebenfalls beschriebene Weise der zweite Verriegelungsmechanismus entrastet. Der erste Verriegelungsmechanismus entriegelt damit also, ausgelöst durch das Bandende, den zweiten Verriegelungsmechanismus, der aus den Verriegelungsnasen 35e, 36e und dem Verriegelungsarm 41b besteht. Auf diese Weise ist sichergestellt, daß auch bei eingedrückten Schnellspultasten 31, 32 diese immer entrastet werden, wenn bei Bandende der erste Verriegelungsmechanismus entriegelt wird und die Kopfplatte damit zurückfahren kann.

Eine dritte Möglichkeit der Entriegelung der Tasten 31 oder 32 ergibt sich dann, wenn bei verriegelter Kopfplatte 74 der Bedienungsschieber 62 eingedrückt wird. Der Stift 60 gelangt dabei in die gestrichelte Lage nach Fig. 2b und 2c. Der Hebel 58 kippt im Uhrzeigersinn um die Achse 59, und der Stift 65 kommt aus der Herzkurve 56 heraus. Der Stift 65 wird dabei aus dem Wirkbereich der Herzkurve 56 herausgehoben. Das Freikommen des Stiftes 65 hat zur Folge, daß der Transporthebel 52 mittels der Feder 54 um die Drehachse 53 im Uhrzeigersinn verschwenkt (Pfeil 67a). Der Hebelarm 55 ist mit einem zweiten Nokken 55a versehen, der sich nun durch das Schwenken des Verbindungselementes 52 auf eine zweite Nase 66c zu bewegt, die an der Unterseite des ersten Verriegelungsarmes 66 angeordnet ist. Der Nocken 55a stößt damit gegen die Nase 66c und dreht den Verriegelungsarm 66 im Uhrzeigersinn (Fig. 3b). Die Relativbewegung zwischen Herzkurve 56 und Raststift 65 ist in Fig. 3b durch den Pfeil 86 dargestellt. Damit stößt die Spitze 66b gegen den Kupplungsansatz 41g, und der Verrriegelungsarm 41b schwenkt um die Achse 41a gemäß Fig. 3b entgegen dem Uhrzeigersinn. Damit wird die jeweils eingedrückte Taste 31 oder 32 entriegelt. Das Eindrücken der Stoptaste 63 hat damit zur Folge, daß beide Verriegelungsmechanismen entriegelt werden, alle Tasten nach außen fahren und die Kopfplatte 74 zurückfährt. In dieser Lage ist der Bandtransport beendet, und das Gerät ist bei Laufwerken ohne Auto-Reverse-Betrieb in eine Standby-Stellung gebracht, wie es bei Bandende bei der zweiten zuvor beschriebenen Entriegelungsmöglichkeit auftritt.

Für eine vierte Entriegelungsmöglichkeit ist am Schwenkhebel 41 als erstes Positionierelement ein Stift 91 vorgesehen. Dieser Stift 91 arbeitet mit einer als zweites Positionierelement dienenden Lasche 92 zusammen, die am Bedienungsschieber 62 befestigt ist. Wird der Bedienungsschieber 62 eingeschoben, dann drückt die Lasche 92 gegen den Stift 91, womit der Schwenkhebel 41, falls der zweite Verriegelungsmechanismus gerastet ist, eine zum Entrasten führende Schwenkbewegung ausführt. Somit ist für den zweiten Veriegelungsmechanismus zusätzlich zur ersten Entrastungsmöglichkeit eine vom Verriegelungszustand des ersten Verriegelungsmechanismus unabhängige weitere Entrastungsmöglichkeit gegeben. Somit wird es möglich, daß das Gerät bei zurückgefahrener Kopfplatte (Stand-by-Stellung) spulen kann.

## Patentansprüche

1. Laufwerk für ein Magnetbandkassettengerät mit einer gegenüber dem abzutastenden Magnetband in eine Spielstellung vor und aus dieser zurück verfahrenden Kopfplatte (74) und mit einander benachbarten verschiebbaren Schnellspul-Bedienungsstangen (33, 34) für das Bedienen von Laufwerksfunktionen, die in der eingeschobenen Lage verriegelbar sind mittels eines Verriegelungsmechanismus (41), wobei der Verriegelungsmechanismus (41) aus einem schwenkbaren Verriegelungshebel (41b) besteht, der mittels Federkraft verriegelnd hinter jeweils eine Rastnase (35e, 36e) einer eingedrückten Schnellspul-Bedienungsstange (33, 34) fällt und der aus der Verriegelungslage herausdrückbar ist mittels einer Rastnase (36e, 35e) der anderen benachbarten Schnellspul-Bedienungsstange (33, 34) bei ihrem Einschieben, dadurch gekennzeichnet, daß

- der Verriegelungshebel (41b) ein Arm eines mehrarmigen Schwenkhebels (41) ist, wobei der andere Arm (41d) federelastisch ausgebildet ist und seine Federkraft erst entfaltet, wenn er beim Einschieben wenigstens einer der Schnellspul-Bedienungsstangen (33, 34) gegen eine an dieser vorgesehene schräge Kante (35d, 36d) aufgelaufen ist; die so erzeugte Federkraft den Verriegelungshebel (41b) hinter die jeweilige Rastnase (35e, 36e) schwenkt, um die eingeschobene Bedienungsstange (33, 34) zu verriegeln; und

- die Rastnasen (35e, 36e) und die schrägen Kanten (35d, 36d) in sich überdeckenden Bereichen (35, 36) der Schnellspulstangen (33, 34) vorgesehen sind.

2. Laufwerk nach Anspruch 1, dadurch gekennzeichnet, daß mit beiden Rastnasen (35a, 36a) und beiden schrägen Kanten (35d, 36d) der Schnellspul-Bedienungsstangen (33, 34) ein auf beide einwirkender Schwenkhebel (41) vorgesehen ist.

3. Laufwerk nach Anspruch 1, dadurch gekennzeichnet, daß die Rastnase (35e, 36e) der Schnellspul-Bedienungsstangen (33, 34) an ihren von den Tastenknöpfen (31, 32) abliegenden Endbereichen (35c, 36c) vorgesehen sind und die schrägen Kanten (35d, 36d) dazwischenliegen, wobei der Schwenkhebel (41) zwischen den schrägen Kanten (35d, 36d) und den Rastnasen (35e, 36e) an einer Drehachse (41a) gelagert ist.

4. Laufwerk nach Anspruch 1, dadurch gekennzeichnet, daß am Verriegelungshebel (41b) ein Stift (91) vorgesehen ist, der von einer anderen, dem Kassettenauswurf dienenden Bedienungsstange (62) betätigbar ist zum Entriegeln der jeweils eingeschobenen verriegelten Schnellspul-Bedienungsstange (33, 34).

5. Laufwerk nach Anspruch 4, dadurch gekennzeichnet, daß sich der Verriegelungshebel (41b) mit seiner Längsrichtung etwa parallel zu einem Außenrand der ihn lagernden Chassisplatte erstreckt.

6. Laufwerk nach Anspruch 1, dadurch gekennzeichnet, daß die Schnellspulstangen (33, 34) in den sich überdeckenden Bereichen (35, 36) Auflaufflächen (35a, 35b bzw. 36a, 36b) aufweisen, mittels der die Kopfplatte (74) aus der Spielstellung herausfahrbar und in der hausgefahrenen Stellung positionierbar ist.

7. Laufwerk nach Anspruch 1, dadurch gekennzeichnet, daß an den Schnellspul-Bedienungsstangen (33, 34) in den sich überdeckenden Bereichen (35, 36) ein Ansatz (37) bzw. eine Auflauffläche (38) vorgesehen sind, mittels der ein Bügel (26), der Zahnräder (28, 29) trägt, von der jeweils eingedrückten Bedienungsstange für die Dauer ihrer Verriegelung gegen Federkraft verschoben ist.

8. Laufwerk nach einem der Ansprüche 1 bis 7, dadurch gekennzeichnet, daß der Schwenkhebel (41) aus Verriegelungshebel (41b) und federelastischem Arm (41d) ein einstückiges Spritzteil sind.

## Claims

1. A deck for a magnetic-tape-cassette apparatus comprising a head-mounting plate (74), which can be moved into and out of a play position relative to the magnetic tape to be scanned, and mutually adjacent movable actuating rods (33, 34) for controlling tape-deck functions, which rods can be latched in the inward positions by means of a latching mechanism (41), which latching mechanism (41) comprises a pivotable latching lever (41b) which under the influence of spring force is latched behind a latching nose (35e, 36e) of a pressed-in fast-wind actuating rod (33, 34) and which can be pressed out of the latched position by means of a latching nose (36e, 35e) of the other adjacent fast-wind actuating rod (33, 34) when it is moved inward, characterized in that

- the latching lever (41b) is an arm of a multi-arm pivotal lever (41), the other arm (41b) being resiliently elastic and deploying its spring force only when during the inward movement of at least one of the fast-wind actuating rods (33, 34) it has run against an oblique surface (35d, 36d) provided on said rod; the spring force thus produced pivots the latching lever (41b) behind the relevant latching nose (35e, 36e) to latch the moved-in actuating rod (33, 34); and

- the latching noses (35e, 36e) and the oblique surfaces (35d, 36d) are provided in overlapping areas (35, 36) of the fast-wind rods (33, 34).

2. A deck as claimed in Claim 1, characterized in that a pivotal lever (41) has been provided, cooperating with both latching noses (35a, 36a) and both oblique surfaces (35d, 36d) of the fast-wind actuating rods (33, 34).

3. A deck as claimed in Claim 1, characterized in that the latching noses (35e, 36e) of the fast-wind actuating rods (33, 34) have been provided at the end portions (35c, 36c) of said rods which are remote from the push-buttons (31, 32) and the oblique surfaces (35d, 36d) are situated therebetween, the pivotal lever (41) being pivotable about a pivotal axis (41a) between the oblique surfaces (35d, 36d) and the latching noses (35e, 36e).

4. A deck as claimed in Claim 1, characterized in that the latching lever (41b) has been provided with a pin (91) which can be actuated by another actuating rod (62), which serves for cassette ejection, to release the respective pressed-in latched fast-wind actuating rod (33, 34).

5. A deck as claimed in Claim 4, characterized in that the longitudinal axis of the latching lever (41b) extends substantially parallel to an outer edge of the deck plate supporting said lever.

6. A deck as claimed in Claim 1, characterized in that in the overlapping areas (35, 36) the fast-wind rods (33, 34) comprise run-on surfaces (35a, 35b and 36a, 36b respectively) by means of which the head-mounting plate (74) can be moved out of the play position and can be positioned in the moved-out position.

7. A deck as claimed in Claim 1, characterized in that in the overlapping areas (35, 36) the fast-wind actuating rods (33, 34) comprise a projection (37) and a run-on surface (38) respectively, by means of which a member (26) carrying gear wheels (28, 29) is displaced against spring force by the instantaneously pressed-in actuating rod as long as said rod is latched.

8. A deck as claimed in any of the Claims 1 to 7, characterized in that the pivotal lever (41) with the latching arm (41b) and the resiliently elastic arm (41d) are formed as a one-piece moulded part.

**Revendications**

1. Système d'entraînement pour un appareil à cassettes de bande magnétique comportant une plaque porte-tête (74) pouvant avancer par rapport à la bande magnétique à analyser dans une position de lecture et pouvant reculer à partir de celle-ci et des tiges de commande de bobinage rapide mobiles voisines (33, 34) pour la commande des fonctions du système d'entraînement, qui peuvent être verrouillées dans la position enfoncée au moyen d'un mécanisme de verrouillage (41), le mécanisme de verrouillage (41) étant constitué d'un levier de verrouillage pivotant (41b) qui, sous l'effet d'une force de ressort, s'engage dans des conditions de verrouillage chaque fois derrière un bec d'encliquetage (35e, 36e) d'une tige de commande de verrouillage rapide enfoncée (33, 34) et qui peut être repoussée hors de la position de verrouillage au moyen d'un bec d'encliquetage (36e, 35e) de l'autre tige de commande de bobinage rapide voisine (33, 34) lors de son enfoncement, caractérisé en ce que

- le levier de verrouillage (41b) est un bras d'un levier pivotant à plusieurs bras (41), l'autre bras (41d) étant un bras à élasticité de ressort et sa force de ressort n'intervenant que lorsque, au moment de l'enfoncement d'au moins une des tiges de commande de bobinage rapide (33, 34), il est parvenu contre un bord oblique (35d, 36d) prévu sur cette tige;

la force de ressort ainsi produite faisant pivoter le levier de verrouillage (41b) derrière le bec d'encliquetage (35e, 36e) correspondant pour verrouiller la tige de commande enfoncée (33, 34), et les becs d'encliquetage (35e, 36e) et les bords obliques (35d, 36d) sont prévus dans des zones (35, 36) des tiges de bobinage rapide (33, 34) qui se chevauchent.

2. Système d'entraînement suivant la revendication 1, caractérisé en ce qu'aux deux becs d'encliquetage (35a, 36a) et aux deux bords obliques (35d, 36d) des tiges de commande de bobinage rapide (33, 34) est associé un levier pivotant (41) agissant sur les deux.

3. Système d'entraînement suivant la revendication 1 caractérisé en ce que les becs d'encliquetage (35e, 36e) des tiges de commande de bobinage rapide (33, 34) sont prévus sur leurs zones d'extrémité (35c, 36c) opposées aux touches de commande (31, 32) et les bords obiques (35d, 36d) occupent des positions intermédiaires, le levier pivotant (41) étant monté à pivot, entre les bords obliques (35d, 36d) et les becs d'encliquetage (35e, 36e), sur un axe de pivotement (41a).

4. Système d'entraînement suivant la revendication 1, caractérisé en ce qu'un doigt (91) est prévu sur le levier de verrouillage (41b) et peut être actionné par une autre tige de commande (62) servant à l'éjection de la cassette, en vue de déverrouiller la tige de commande de bobinage rapide (33, 34) verrouillée et enfoncée.

5. Système d'entraînement suivant la revendication 4, caractérisé en ce que le levier de verrouillage (41b) s'étend dans le sens de sa longueur en substance parallèlement à un bord extérieur de la plaque de châssis qui le porte.

6. Système d'entraînement suivant la revendication 1, caractérisé en ce que les tiges de bobinage rapide (33, 34) présentent des surfaces de rampe (35a, 35b et 36a, 36b) dans les zones (35, 36) qui se chevauchent, au moyen desquelles la plaque porte-tête (74) peut être repoussée hors de la position de lecture et être positionnée dans la position sortie.

7. Système d'entraînement suivant la revendication 1, caractérisé en ce qu'une saillie (37) ou une surface de rampe (38) est prévue sur les tiges de commande de bobinage rapide (33, 34) dans les zones (35, 36) qui se chevauchent, au moyen de laquelle un étrier (26) qui porte des roues dentées (28, 29) est déplacé à l'encontre d'une force de ressort par la tige de commande enfoncée, pendant la durée de son verrouillage.

8. Système d'entraînement suivant l'une quelconque des revendications 1 à 7, caractérisé en ce que le levier pivotant (41) est une pièce moulée par injection constituée du levier de verrouillage (41b) et du bras à élasticité de ressort (41d).

Fig.1

EP 0 300 187 B1

Fig.2a

Fig.2b

EP 0 300 187 B1

Fig.2c

13

# Fig.3a

# Fig.3b

Fig.4

EP 0 300 187 B1

Fig.5